# EUROPÄISCHE PATENTSCHRIFT

(11) **EP 2 250 137 B1**
(45) Veröffentlichungstag und Bekanntmachung des Hinweises auf die Patenterteilung: **24.06.2015**
(21) Anmeldenummer: 09714220.2
(22) Anmeldetag: 25.02.2009
(51) Int. Cl.: C04B 30/00, C04B 30/02, C04B 26/14, C04B 28/26

(54) **VERFAHREN ZUR HERSTELLUNG EINES PLATTEN- ODER PROFILFÖRMIGEN BAUELEMENTES SOWIE PLATTEN- ODER PROFILFÖRMIGES BAUELEMENT**
METHOD FOR PRODUCING A FLAT OR PROFILED COMPONENT, AND FLAT OR PROFILED COMPONENT
PROCÉDÉ DE FABRICATION D'UN ÉLÉMENT DE CONSTRUCTION EN FORME DE PLAQUE OU DE PROFILÉ ET ÉLÉMENT DE CONSTRUCTION EN FORME DE PLAQUE OU DE PROFILÉ

(30) Priorität: 28.02.2008 DE 102008011626
(43) Veröffentlichungstag der Anmeldung: 17.11.2010
(73) Patentinhaber: STO SE & Co. KGaA, 79780 Stühlingen (DE)
(72) Erfinder: KOERDT, Frithjof, 89312 Günzburg (DE); PFEIFFER, Christian, 89423 Gundelfingen (DE)
(74) Vertreter: Gottschalk, Matthias
(86) Internationale Anmeldenummer: PCT/EP2009/001336
(87) Internationale Veröffentlichungsnummer: WO 2009/106311

(56) Entgegenhaltungen:
- EP-A- 0 399 514
- AT-B- 244 210
- DE-A1- 19 539 309
- FR-A- 2 454 491

## Beschreibung

Die Erfindung betrifft ein Verfahren zur Herstellung eines platten- oder profilförmigen Bauelementes, das insbesondere als Wand-, Decken- oder Fußbodenbauteil einsetzbar ist. Dabei finden ein Blähglasgranulat und ein organisches Bindemittel Verwendung. Ferner betrifft die Erfindung ein platten- oder profilförmiges Bauelement.

Platten- oder profilförmige Bauelemente sind bei der Errichtung von Gebäuden vielseitig einsetzbar. Sie können Bestandteil einer Wand-, Decken- oder Fußbodenkonstruktion sein. Entsprechend dem jeweiligen Verwendungszweck können sie Anforderungen im Hinblick auf beispielsweise den Wärmeschutz, Schallschutz oder Brandschutz erfüllen. Der jeweilige Verwendungszweck bestimmt auch die sonstigen bauphysikalischen Eigenschaften, die das platten- oder profilförmige Bauelement gegebenenfalls aufweisen muss. Ist beispielsweise der Einsatz im Außenbereich geplant, muss sich das Bauelement in der Regel als feuchtigkeitsunempfindlich oder sogar wasserabweisend erweisen. Darüber hinaus kann ein platten- oder profilförmiges Bauelement auch hohen mechanischen Beanspruchungen ausgesetzt sein, beispielsweise wenn es Bestandteil einer Fußbodenkonstruktion ist und demzufolge in der Lage sein soll, hohe Verkehrslasten aufnehmen zu können. Gefordert wird regelmäßig auch, dass das jeweilige Bauelement vor Ort, d.h. auf der Baustelle, leicht zu handhaben ist. Als vorteilhaft erweisen sich daher Bauelemente mit einem geringen Raum- oder Flächengewicht, da sie weiterhin Abmessungen des Bauelementes ermöglichen, die eine rationelle Bauweise gewährleisten.

Es zeigt sich, dass an ein derartiges Bauelement Anforderungen ganz unterschiedlicher Art gestellt werden, denen in der Regel nicht in gleichem Maße entsprochen werden kann. Es werden daher von der Bauindustrie spezielle Bauelemente entwickelt und angeboten, die im Hinblick auf den jeweiligen Verwendungszweck optimiert sind.

Ein solches Bauelement stellt beispielsweise die Schallabsorptionsplatte der EP 0 399 514 A1 dar. Die hierin beschriebene Schallabsorptionsplatte besteht aus einer Vielzahl von mit einem Bindemittel überzogenen, anorganischen Teilchen, die nur an den Berührungsstellen der Überzüge haftend miteinander verbunden sind und Schallabsorptionskammern unterschiedlicher Größe einschließen. Als anorganische Teilchen finden Blähglaskugeln bzw. -körner Einsatz, die mit Polystyrolkugeln vermischt werden und nach Zugabe eines Zweikomponenten-Bindemittels auf Epoxidharzbasis zu einem Bauelement heiß verdichtet werden. Dabei werden die Polystyrolkugeln eingeschmolzen und hinterlassen Hohlräume, die die besagten Schallabsorptionskammern bilden. Gleichwohl die vorgeschlagene Platte eine Vielzahl positiver Eigenschaften besitzen soll, beispielsweise eine hohe Stabilität bei einer gleichzeitig beachtlichen Leichtigkeit, kommen ihre Vorzüge vorrangig jedoch nur beim Einsatz als Schallabsorptionsplatte zur Geltung.

Aus der DE 195 39 309 A1 geht ferner eine Bauplatte mit schalldämmenden Eigenschaften hervor, die aus zwei unterschiedlichen Sekundärrohstoffen besteht. Um die Recyclingfähigkeit der Bauplatte zu verbessern, werden Zellstofffasern als erster Sekundärrohstoff und Blähglas als zweiter Sekundärrohstoff vorgeschlagen. Ferner wird ein Verfahren angegeben, mittels dessen eine solche Platte energiesparend herstellbar sein soll.

Aus der FR 2 454 491 A ist zudem ein Verfahren zur Herstellung einer Bauplatte bekannt, bei dem Blähglas- und Polystyrol-Partikel gemischt, mit Phenolharz beschichtet und anschließend in einer Form verpresst werden. Die derart erhaltene Bauplatte soll eine hohe mechanische Festigkeit aufweisen und zudem nicht brennbar sein.

Aufgabe der vorliegenden Erfindung ist es, ein platten- oder profilförmiges Bauelement mit bauphysikalischen Eigenschaften für einen möglichst universellen Einsatz, insbesondere aber für den Einsatz als Fassadenbauelement zu schaffen, das zudem einfach und kostengünstig herstellbar ist. Entsprechend ist eine weitere Aufgabe in der Bereitstellung eines Verfahrens zur Herstellung eines solchen Bauelementes zu sehen.

Die Aufgaben werden gelöst durch ein Verfahren gemäß der Merkmalskombination des Anspruchs 1 und einem Bauelement gemäß der Merkmalskombination des Anspruchs 8. Jeweils vorteilhafte Weiterentwicklungen werden in den Unteransprüchen beschrieben.

Das Verfahren umfasst wenigstens die folgenden Schritte:
- Mischen des Blähglasgranulats mit den Polystyrolkugeln und Zugabe des Bindemittels,
- Erstellen einer homogenen Mischung aus Blähglasgranulat, Polystyrolkugeln und Bindemittel,
- Einbringen der homogenen Mischung in eine Form oder in eine die Form ersetzende Hilfsvorrichtung im Falle eines formlosen Verfahrens, insbesondere bei der kontinuierlichen Produktion,
- Verdichten durch Pressen und Aushärten zu einem platten- oder profilförmigen Bauelement unter Einwirkung von Wärme.

Erfindungsgemäß wird Epoxidharz als Bindemittel verwendet. Der Blähglasgranulatanteil beträgt wenigstens 40 Vol-% und der Polystyrolkugelanteil 5-50 Vol-%. Ferner erfindungsgemäß erfolgt das Aushärten unter Einwirkung von Wärme bei einer Temperatur von ≥90°C, wobei die maximale Temperatur zwischen 100°C und 120°C beträgt, so dass die Struktur der Polystyrolkugeln zumindest im Wesentlichen erhalten bleibt.

Ein nach diesem Verfahren hergestelltes platten- oder profilförmiges Bauelement weist eine Vielzahl an positiver Eigenschaften auf, die überraschenderweise u.a. darauf beruhen, dass das Verdichten und Aushärten der Blähglas-Polystyrol-Bindemittel-Mischung bei einer Temperatur ≥90°C erfolgt. Die Temperatur ist derart gewählt, dass sie unterhalb des Schmelzpunktes der Polystyrolkugeln liegt. In Abhängigkeit von den jeweils verwendeten Polystyrolkugeln beträgt die maximale Temperatur daher zwischen 100°C und 120°C, vorzugsweise zwischen 100°C und 110°C. Eine thermische Schädigung erfahren die Polystyrolkugeln dann nicht. Auch eine mechanische Schädigung der Polystyrolkugeln kann weitestgehend vermieden werden, indem eine auf die Korngröße des Blähglasgranulats abgestimmte Korngrößenverteilung der Polystyrolkugeln sowie ein bestimmtes Mischungsverhältnis dieser beiden Ausgangsstoffe gewählt wird. Hierauf wird später näher eingegangen.

Aufgrund der gewählten Temperatur kann der Vorgang des Verdichtens und Aushärtens der homogenen Mischung zeitlich verkürzt werden, was ebenfalls zum Erhalt der Struktur der Polystyrolkugeln beiträgt. In Abhängigkeit von der gewünschten Bauteilstärke und der konkret verwendeten Rezeptur beansprucht dieser Vorgang zwischen 120 und 540 Sekunden, vorzugsweise zwischen 160 und 480 Sekunden. Dadurch wird auch sichergestellt, dass bei der Herstellung des platten- und/oder profilförmigen Bauelements keine Entmischung der verwendeten Ausgangsstoffe stattfindet, beispielsweise durch ein Aufschwimmen der Polystyrolkugeln und/oder ein Absetzen des Bindemittels. Darüber hinaus bedeutet eine Verkürzung der Aushärtzeit eine Zeit- und damit Kostenersparnis bei der Herstellung des Produktes.

Als Bindemittel wird Epoxidharz vorgeschlagen. Dieses polymerisiert bei einer Temperatur ≥90°C in der gewünschten Zeit und verfestigt sich zu einer Blähglasgranulat-Bindemittel-Struktur, in der die Polystyrolkugeln gleichmäßig verteilt eingelagert sind.

Als vorteilhaft kann es sich erweisen, der homogenen Mischung aus Blähglasgranulat, Polystyrolkugeln und Bindemittel Glas-, Metall-, Kohle-, Polyester- oder Mineralfasern als Bewehrung beizugeben. Die Beigabe ist jedoch lediglich optional, da auch ohne zusätzliche Bewehrung das platten- oder profilförmige Bauelement eine für die meisten Verwendungszwecke ausreichend hohe Stabilität aufweist.

Alternativ oder ergänzend zu der vorstehend genannten Maßnahme kann in einem weiteren Verfahrensschritt auch ein Vlies und/oder Gewebe aus Glas-, Metall-, Kohle-, Polyester- oder Mineralfasern als Bewehrung in die Form oder die Form ersetzende Hilfsvorrichtung eingelegt werden. Des Weiteren ist es möglich, nachträglich ein mit Bindemittel getränktes Vlies und/oder Gewebe aus Glas-, Metall-, Kohle-, Polyester- oder Mineralfasern als zusätzliche Bewehrung auf wenigstens eine Außenseite des Bauelementes aufzulegen. Auch die Verwendung eines solchen Vlieses und/oder Gewebes ist lediglich optional.

Vorzugsweise wird zur Herstellung der homogenen Mischung ein Blähglasgranulat einer Korngröße von 0,1 bis 8,0mm, weiterhin vorzugsweise von 0,25 bis 4,0mm verwendet. Weiterhin besitzt die homogene Mischung einen Blähglasgranulatanteil von wenigstens 40 Vol-%. Die Polystyrolkugeln weisen eine Korngröße von 0,25 bis 4,0mm, vorzugsweise von 0,5 bis 3,0mm auf. Ihr Anteil in der homogenen Mischung beträgt 5 bis 50 Vol-%, weiterhin bevorzugt 10 bis 30 Vol-%. Die Angaben beziehen sich jeweils auf eine noch unverdichtete und noch nicht ausgehärtete Blähglas-Polystyrol-Bindemittel-Mischung. Korngrößenverteilung und Mischungsanteile sind derart gewählt, dass sich nach dem Verdichten und Aushärten des Formteils die mit Bindemittel benetzten Blähglaskugeln untereinander berühren und gemeinsam mit dem Bindemittel eine feste, gleichmäßig aufgebaute Struktur bilden, in deren Zwischenräumen die Polystyrolkugeln eingelagert sind. Die Polystyrolkugeln behalten ihre Ausgangsform und -struktur beim Verdichten und Aushärten des Formteils im Wesentlichen bei. Selbst der zum Verdichten erforderliche Druck führt nicht oder kaum zu einer Verformung der Polystyrolkugeln. Dies ist unter anderem auch darauf zurück zuführen, dass je nach Platten- oder Profilstärke des herzustellenden Bauelementes der Durchmesser der Polystyrolkugeln maximal 40%, weiterhin vorzugsweise maximal 25% der jeweiligen Platten- oder Profilstärke beträgt. Beispielsweise beträgt der Durchmesser bei Herstellung eines plattenförmigen Bauelementes mit einer Plattenstärke von 8mm bevorzugt 1 bis 2mm.

Bei der Herstellung der Blähglas-Polystyrol-Bindemittel-Mischung werden vorzugsweise expandierte Polystyrolkugeln in den vorstehend genannten Korngrößen verwendet.

Das zur Lösung der Aufgabe beanspruchte platten- oder profilförmige Bauelement ist unter Verwendung von Blähglasgranulat, Polystyrolkugeln und einem organischen Bindemittel nach einem erfindungsgemäßen Verfahren hergestellt worden und zeichnet sich durch einen homogenen Aufbau aus, wobei das Blähglasgranulat mit dem Bindemittel eine feste Struktur ausbildet, in deren Zwischenräumen die Polystyrolkugeln eingelagert sind. Bevorzugt weisen die im Bauelement enthaltenen Polystyrolkugeln im Wesentlichen dieselbe Form und Struktur wie das verwendete Ausgangsmaterial auf. D.h., dass die Polystyrolkugeln bei der Herstellung des Bauelementes im Wesentlichen weder eine thermische, noch eine mechanische Schädigung erfahren. Eine geringfügige Verformung wird gegebenenfalls hingenommen, die jedoch ohne Einfluss auf die Bauelementeigenschaften ist.

Diese zeichnen sich insbesondere dadurch aus, dass das platten- oder profilförmige Bauelement einen λ-Wert ≤0,10 W/(m²K), vorzugsweise ≤0,07 W/(m²K) besitzt. Das Bauelement zeichnet sich demzufolge gegenüber einem Bauelement lediglich aus einer Blähglas-Bindemittelmischung durch verbesserte Wärmedämmeigenschaften aus.

Des Weiteren beträgt das Raumgewicht des platten- oder profilformigen Bauelementes maximal 400kg/m³, weiterhin bevorzugt maximal 350kg/m³. Selbst eine 20mm starke Fassadenplatte mit den üblichen Außenabmessungen ist demzufolge auf der Baustelle noch leicht handhabbar. Vorteilhaft wirkt sich ein geringes Raumgewicht auch auf die Art der Befestigung des Bauelementes sowie die zur Befestigung vorgesehene Unterkonstruktion aus.

Nach einer bevorzugten Ausführungsform besitzt das platten- oder profilförmige Bauelement ein E-Modul ≤2.000 N/mm², vorzugsweise ≤1.200 N/mm². Ein geringes E-Modul hat sich insbesondere für plattenförmige Bauelemente als positive Eigenschaft erwiesen, da es sich positiv auf das Verhalten der Platte bei mechanischer Belastung auswirkt. Das Bauelement ist weniger spröde und neigt daher unter anderem weniger zu Rissen und Abplatzungen an der Bauteiloberfläche oder hierauf aufgetragenen nachträglichen Beschichtungen. Zudem sind Bauelemente mit einer geringeren Steifigkeit ebenfalls leichter zu handhaben.

Die Dicke des platten- oder profilformigen Bauelementes beträgt maximal 50mm, vorzugsweise zwischen 5mm und 20mm. Bei derartigen Dicken bzw. Stärken kann ein durchgängig homogener Aufbau des Bauelements gewährleistet werden. Entsprechend der jeweils vorgesehenen Stärke ist für jedes platten- oder profilförmige Bauelement die optimale Korngrößenverteilung des Blähglasgranulats und der Polystyrolkugeln sowie ihr jeweiliger Anteil zu bestimmen. Erfindungsgemäß beträgt der Blähglasgranulatanteil wenigstens 40 Vol-% und der Anteil der Polystyrolkugeln 5 bis 50 Vol-%, vorzugsweise 10 bis 30 Vol-%. Dabei findet insbesondere ein Blähglasgranulat der Korngröße 0,1 bis 8,0mm, vorzugsweise von 0,25 bis 4,0mm Verwendung. Die Polystyrolkugeln weisen bevorzugt eine Korngröße von 0,25 bis 4,0mm, vorzugsweise 0,5 bis 3,0mm auf. Der Durchmesser der Polystyrolkugeln beträgt dabei maximal 40 %, vorzugsweise maximal 25% der jeweiligen Platten- oder Profilstärke. D.h., bei einer Platte mit einer Stärke von beispielsweise 8mm weisen die Polystyrolkugeln einen Durchmesser von 1 bis 2mm auf.

Bei der Herstellung des platten- oder profilförmigen Bauelementes nach dem erfindungsgemäßen Verfahren werden bevorzugt expandierte Polystyrolkugeln in der vorstehend genannten Korngröße verwendet.

Beansprucht wird ferner die Verwendung eines platten- oder profilförmigen Bauelementes der vorstehend beschriebenen Art als Fassadenbauteil. Insbesondere wird die Verwendung des Bauelementes als Putzträgerplatte vorgeschlagen. Das Bauelement weist im Hinblick auf die zu erwartende Beanspruchung eines Außenbauteils hervorragende Eigenschaften auf. Es ist feuchtigkeitsunempfindlich und nimmt nur sehr wenig Wasser auf, so dass hygrische Längenänderungen gering gehalten werden können. Ferner ist es schwer entflammbar. Zudem kann es aufgrund verbesserter Wärmedämmeigenschaften unterstützend zur Wärmedämmung einer Gebäudeaußenwand herangezogen werden, so dass ggf. eine Reduzierung der herkömmlichen Wärmedämmschichten möglich ist. Weiterhin weist das Bauelement eine hohe Stabilität bei einem gleichzeitig geringen E-Modul auf und ist zudem einfach und kostengünstig herstellbar. Die bevorzugte beanspruchte Verwendung als Fassadenbauteil, insbesondere als Putzträgerplatte, ist hier jedoch nur beispielhaft genannt. Weitere Einsatzgebiete sind aufgrund der Vielseitigkeit des platten- oder profilförmigen Bauelementes denkbar.

Nachfolgend wird das Beispiel einer konkreten Zusammensetzung einer homogenen Mischung zur Verwendung in einem der vorstehend beschriebenen Verfahren bzw. zur Herstellung eines erfindungsgemäßen Bauelementes genannt. Die Mischung enthält:
- Blähglasgranulat mit einer Korngröße von 0,25mm bis 4,0mm, wobei mehr als 50% des Blähglasgranulats eine Korngröße zwischen 0,5mm und 2,0mm aufweist und wobei weiterhin der Anteil des Blähglasgranulats insgesamt mehr als 50 Vol-% beträgt;
- expandierte Polystyrolkugeln mit einer Korngröße zwischen 1mm und 2mm, wobei der Anteil 20 Vol-% beträgt;
- ein Zweikomponenten-Bindemittel auf Epoxidharzbasis, wobei der Anteil des Bindemittels weniger als 15 Vol-% beträgt;
- ein Treibmittel.

Das aus dieser Mischung hergestellte Bauelement kann zudem nachträglich durch Aufbringen eines mit Bindemittel getränkten Glasfasergittergewebes auf wenigstens einer Außenseite des Bauelementes bewehrt werden.

## Patentansprüche

1. Verfahren zur Herstellung eines platten- oder profilförmigen Bauelementes, das insbesondere als Wand-, Decken- oder Fußbodenbauteil einsetzbar ist, unter Verwendung von Blähglasgranulat und einem organischen Bindemittel, wobei
das Verfahren wenigstens die folgenden Schritte umfasst:
- Mischen des Blähglasgranulats mit Polystyrolkugeln und Zugabe des Bindemittels,
- Erstellen einer homogenen Mischung aus Blähglasgranulat, Polystyrolkugeln und Bindemittel,
- Einbringen der homogenen Mischung in eine Form oder in eine die Form ersetzende Hilfsvorrichtung im Falle eines formlosen Verfahrens, insbesondere bei der kontinuierlichen Produktion,
- Verdichten durch Pressen und Aushärten zu einem platten- oder profilförmigen Bauelement unter Einwirkung von Wärme,
**dadurch gekennzeichnet, dass**
Epoxidharz als Bindemittel verwendet wird, der Blähglasgranulatanteil wenigstens 40 Vol-% und der Polystyrolkugelanteil 5-50 Vol-% beträgt und das Aushärten unter Einwirkung von Wärme bei einer Temperatur von ≥90°C erfolgt, wobei die maximale Temperatur zwischen 100°C und 120°C beträgt, so dass die Struktur der Polystyrolkugeln im Wesentlichen erhalten bleibt.

2. Verfahren nach Anspruch 1, **dadurch gekennzeichnet, dass** der homogenen Mischung aus Blähglasgranulat, Polystyrolkugeln und Bindemittel Glas-,
Metall-, Kohle-, Polyester- oder Mineralfasern als Bewehrung beigegeben werden.

3. Verfahren nach einem der Ansprüche 1 bis 2, **dadurch gekennzeichnet, dass** in einem weiteren Verfahrenschritt ein Vlies und/oder Gewebe aus Glas-, Metall-, Kohle-, Polyester- oder Mineralfasern als Bewehrung in die Form oder die Form ersetzende Hilfsvorrichtung eingelegt wird.

4. Verfahren nach einem der Ansprüche 1 bis 3, **dadurch gekennzeichnet, dass** Blähglasgranulat einer Korngröße von 0,1 bis 8,0 mm, vorzugsweise von 0,25 bis 4,0 mm, verwendet wird.

5. Verfahren nach einem der Ansprüche 1 bis 4, **dadurch gekennzeichnet, dass** Polystyrolkugeln einer Korngröße von 0,25 bis 4,0 mm, vorzugsweise 0,5 bis 3,0 mm, verwendet werden.

6. Verfahren nach einem der Ansprüche 1 bis 5, **dadurch gekennzeichnet, dass** eine homogene Mischung mit einem Polystyrolkugelanteil von 10 bis 30 Vol-%, verwendet wird.

7. Verfahren nach einem der Ansprüche 1 bis 6, **dadurch gekennzeichnet, dass** bei der Herstellung der Blähglas-Polystyrol-Bindemittel-Mischung expandierte Polystyrolkugeln verwendet werden.

8. Platten- oder profilförmiges Bauelement, das unter Verwendung von Blähglasgranulat, Polystyrolkugeln und einem organischen Bindemittel nach einem Verfahren nach einem der Ansprüche 1-7 hergestellt worden ist und einen homogenen Aufbau besitzt, wobei das Blähglasgranulat mit dem Bindemittel eine feste Struktur ausbildet, in deren Zwischenräumen die Polystyrolkugeln eingelagert sind.

9. Bauelement nach Anspruch 8, **dadurch gekennzeichnet, dass** die Gesamtdicke maximal 50 mm, vorzugsweise zwischen 5 mm und 20 mm beträgt.

10. Verwendung eines platten- oder profilförmigen Bauelementes nach Anspruch 8 oder 9 als Fassadenbauteil, insbesondere als Putzträgerplatte.

## Claims

1. A method for producing a plate-shaped or profile-shaped building element, which can be used in particular as a wall, ceiling or floor building component, making use of expanded glass granulate and an organic binder, wherein the method comprises at least the following steps:
- mixing of the expanded glass granulate with polystyrene spheres and addition of the binder,
- preparation of a homogeneous mixture of expanded glass granulate, polystyrene spheres and binder,
- introduction of the homogeneous mixture into a mould or into an auxiliary device replacing the mould in the case of a formless process, especially in continuous production,
- compaction by pressing and curing to form a plate-shaped or profile-shaped building element under the effect of heat,
**characterised in that**
epoxy resin is used as a binder, the expanded glass granulate component amounts to at least 40 Vol.-% and the polystyrene sphere component to 5-50 Vol.-% and the curing takes place under the effect of heat at a temperature of ≥ 90°C, wherein the maximum temperature amounts to between 100°C and 120°C, so that the structure of the polystyrene spheres is essentially maintained.

2. The method according to claim 1, **characterised in that** glass fibres, metal fibres, carbon fibres, polyester fibres or mineral fibres are added as a reinforcement to the homogeneous mixture comprising expanded glass granulate, polystyrene spheres and binder.

3. The method according to any one of claims 1 to 2, **characterised in that**, in a further process step, a nonwoven fabric and/or woven fabric of glass fibres, metal fibres, carbon fibres, polyester fibres or mineral fibres is placed as a reinforcement in the mould or in the auxiliary device replacing the mould.

4. The method according to any one of claims 1 to 3, **characterised in that** expanded glass granulate having a grain size of 0.1 to 8.0 mm, preferably of 0.25 to 4.0 mm, is used.

5. The method according to any one of claims 1 to 4, **characterised in that** polystyrene spheres having a grain size of 0.25 to 4.0 mm, preferably of 0.5 to 3.0 mm, are used.

6. The method according to any one of claims 1 to 5, **characterised in that** a homogeneous mixture with a polystyrene sphere component of 10 to 30 vol.-% is used.

7. The method according to any one of claims 1 to 6, **characterised in that** expanded polystyrene spheres are used in the production of the expanded glass/polystyrene/binder mixture.

8. A plate-shaped or profile-shaped building element, which has been produced using expanded glass granulate, polystyrene spheres and an organic binder according to a method according to any one of claims 1-7 and has a homogeneous structure, wherein the expanded glass granulate with the binder forms a solid structure, in the intermediate spaces whereof the polystyrene spheres are embedded.

9. A building element according to claim 8, **characterised in that** the total thickness amounts to at most 50 mm, preferably between 5 mm and 20 mm.

10. Use of a plate-shaped or profile-shaped building element according to claim 8 or 9 as a facade building component, in particular as a plaster base board.

## Revendications

1. Procédé pour la fabrication d'un élément de construction en forme de panneau ou de profilé, lequel peut être utilisé en particulier en tant qu'élément de mur, de plafond ou de plancher, à partir d'un granulat de verre soufflé et d'un liant organique, le procédé comprenant au moins les étapes suivantes :
- mélange du granulat de verre soufflé avec des billes de polystyrène et ajout du liant,
- obtention d'un mélange homogène composé du granulat de verre soufflé, des billes de polystyrène et du liant,
- introduction du mélange homogène dans un moule ou dans un dispositif auxiliaire remplaçant le moule dans le cas d'un procédé sans moule, en particulier lors d'une production continue,
- compactage par pressage et durcissement en un élément de construction en forme de panneau ou de profilé sous l'effet de la chaleur,
**caractérisé en ce que**
une résine époxy est utilisée en tant que liant, la part de granulat de verre soufflé constitue au moins 40% en volume et la part de billes de polystyrène entre 5 et 50% en volume, et le durcissement sous l'effet de la chaleur est réalisé à une température ≥ 90°C, la température maximale s'élevant de 100°C à 120°C, de manière à conserver essentiellement la structure des billes de polystyrène.

2. Procédé selon la revendication 1, **caractérisé en ce que** le mélange homogène de granulat de verre soufflé, de billes de polystyrène et de liant est enrichi en fibres de verre, de métal, de carbone, de polyester ou minérales, en tant qu'armature.

3. Procédé selon l'une des revendications 1 à 2, **caractérisé en ce que** dans une étape de procédé suivante, un non-tissé et/ou une toile de fibres de verre, de métal, de carbone, de polyester ou minérales est placé(e) en tant qu'armature dans le moule ou dans le dispositif auxiliaire remplaçant le moule.

4. Procédé selon l'une des revendications 1 à 3, **caractérisé en ce que** le granulat de verre soufflé utilisé présente une taille de grain de 0,1 à 8,0 mm, de préférence de 0,25 à 4,0 mm.

5. Procédé selon l'une des revendications 1 à 4, **caractérisé en ce que** les billes de polystyrène utilisées présentent une taille de grain de 0,25 à 4,0 mm, de préférence de 0,5 à 3,0 mm.

6. Procédé selon l'une des revendications 1 à 5, **caractérisé en ce que** le mélange homogène utilisé présente une part de billes de polystyrène de 10 à 30% en volume.

7. Procédé selon l'une des revendications 1 à 6, **caractérisé en ce que** des billes de polystyrène expansées sont utilisées pour obtenir le mélange verre soufflé-polystyrène-liant.

8. Élément de construction en forme de panneau ou de profilé, lequel a été réalisé à partir de granulat de verre soufflé, de billes de polystyrène et d'un liant organique, d'après un procédé selon l'une des revendications 1 à 7, et présente une structure homogène, le granulat de verre soufflé formant une structure solide avec le liant, dans les interstices de laquelle sont intégrées les billes de polystyrène.

9. Élément de construction selon la revendication 8, **caractérisé en ce que** l'épaisseur totale mesure au maximum 50 mm, de préférence entre 5 mm et 20 mm.

10. Utilisation d'un élément de construction en forme de panneau ou de profilé selon la revendication 8 ou 9 en tant qu'élément de façade, en particulier en tant que panneau de support d'enduit.
